# EUROPEAN PATENT APPLICATION

(11) **EP 2 088 117 A1**
(43) Date of publication of application: **12.08.2009**
(21) Application number: 08101472.2
(22) Date of filing: 11.02.2008
(51) Int. Cl.: B66F 9/24, G05D 16/20, H02H 7/122, H02M 1/092

(54) **High power switch device and a power pack comprising a high power switch device.**

(71) Applicant: Haldex Hydraulics AB, 280 40 Skanes Fagerhult (SE)
(72) Inventor: Wängelin, Roland, 740 20, VÄNGE (SE)
(74) Representative: Holmberg, Nils Anders Patrik

(57) **Abstract**

Power pack comprising a high power switch device (HPSD), a D.C. motor and a hydraulic pump, where the high power switch device includes a control unit arranged to monitor and control at least one predefined operating parameter of the power pack, and an electronically controlled high power switch unit arranged to apply a power supply to the D.C.-motor in dependence of an input control signal. The power pack is to be used in conjunction with e.g. a tailgate lift, a platform lift, a forklift or a highlift.

## Description

### Field of the invention

The present invention relates to a high power switch device being used to supply power to a power consuming device, and a power pack comprising a high power switch device with a D.C. motor and hydraulic pump according to the preambles of the independent claims.

### Background of the invention

Conventionally a solenoid is part of a hydraulic power pack system consisting of a direct-current motor (D.C. motor) and a hydraulic pump. The complete system is used e.g. in the vehicle industry, e.g. for a tailgate lift. The solenoid-unit is to function as a power relay with an inductive load, the nominal current will be about 250A (maximum 300A) and with an operating current at maximum 800A.

Present hydraulic tailgate lifts for trucks and trailers typically include at least one power pack system with electro-mechanical starter solenoids. A typical example of such a device is shown in the international application WO 95/03951 , "Gray et al", where a dual power pack for double acting tailgate lifts is shown. One motor is used for moving the lift upwards and the other motor is used for moving the lift downwards. Because of the regular use, a failing motor will be noticed immediately and the other motor can take over.

In the published application US 2003/0174064 Al an overload detection device for a work platform that detects if the load on the work platform of a high-lift work vehicle is excessive, is described. Load sensors are provided on supporting portions of the work platform and load detection values are compared with a predetermined value, and a warning is issued if an overload state is detected.

In these prior art system there is no direct protection for the switch in case of overload, incorrect use of the lift and other scenarios that might result in a defective part. The invention is based on the insight that the weak link in the chain is the electro-mechanical solenoid, which is sensitive to overload, as it will overheat and melt and thus has to be replaced.

Thus, the object of the present invention is to remove the above stated deficiencies with the prior art systems.

### Summary of the invention

The above-mentioned object is achieved by a high power switch device and a power pack comprising a high power switch device according to the independent claims.
Preferred embodiments are set forth in the dependent claims.

The high power switch device (HPSD) according to the present invention is used to supply power to a power consuming device, and includes a control unit and an electrically controlled high power switch unit. The HPSD may be used in a wide range of applications, but is particularly suitable to be applied in a power pack, including a D.C. motor and a hydraulic pump.

According to the present invention the HPSD comprises a control unit that makes it possible to monitor and control operating parameters of the power pack. This reduces the risk of incorrect use of the power pack and eliminates the risk for an overheated motor, running with a too high current outlet or too low voltage, short, fast operation of the relay, where the user "stresses" the system with a lot of keying in a short time and other possible incorrect use of the power pack.

By having an electrically controlled switch it is possible to include security functions, e.g. against overload and too low/high supply voltage. It is further possible to store information and to read out how the equipment has been used, operating time, operation with excess current etc, which brings a surplus value to the final product. As it is possible to read out how the equipment has been used, recommendations for other power packs more suitable for that particular application can be made.

Thus, the object is achieved by the present invention by replacing an electro-mechanical switch used today in power pack systems by an electrically controlled switch device. The advantage of having an electrically controlled switch device is that it is possible to monitor and control the power pack and include security functions. A wiser usage of the power pack according to certain limitations can be made, to avoid development of faults and damages in the switch unit and other parts of the power pack.

The electronic equipment makes it possible to read out all information stored in the HPSD and also control the HPSD at a distance (with mobile communication, GPRS etc), which further shows the versatility of having an electronically controlled high power switch device.

### Short description of the appended drawings

Figure 1 shows a schematic block diagram illustrating a high power switch device implemented in a power pack for a power consuming device, according to the present invention.
Figure 2 shows a schematic block diagram illustrating the high power switch device, according to the present invention
Figure 3 illustrates a circuit design for the high power switch device.
Figure 4 shows a flowchart of a start of a power pack under normal operation.
Figure 5 shows a flowchart of a start of a power pack when a temperature has exceeded a threshold.

### Detailed description of preferred embodiments of the invention

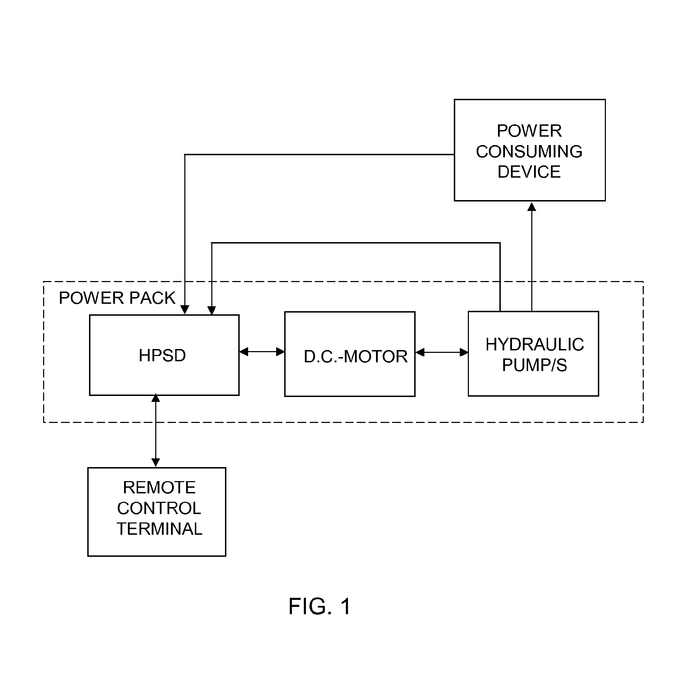

Referring to the drawings in greater detail, in fig 1 there is illustrated a high power switch device (HPSD) connected to a D.C.-motor which in turn runs a hydraulic pump that can be connected to a power consuming device. The HPSD, the D.C.-motor and the hydraulic pump are all parts of a power pack, which is a part of a modular powertrain. A power pack module typically contains some type of motor and may also contain a transmission and various supporting components. The whole unit may be easily removed or separated from the rest of the machine to facilitate replacement or repair; it thus has a high degree of exchangeability.

The high power switch device is able to communicate with a remote control terminal, and receives e.g. requests to send information from the HPSD to the remote control terminal. This transmission may be accomplished in a number of different ways, e.g. wireless, wired and/or optical transmission.

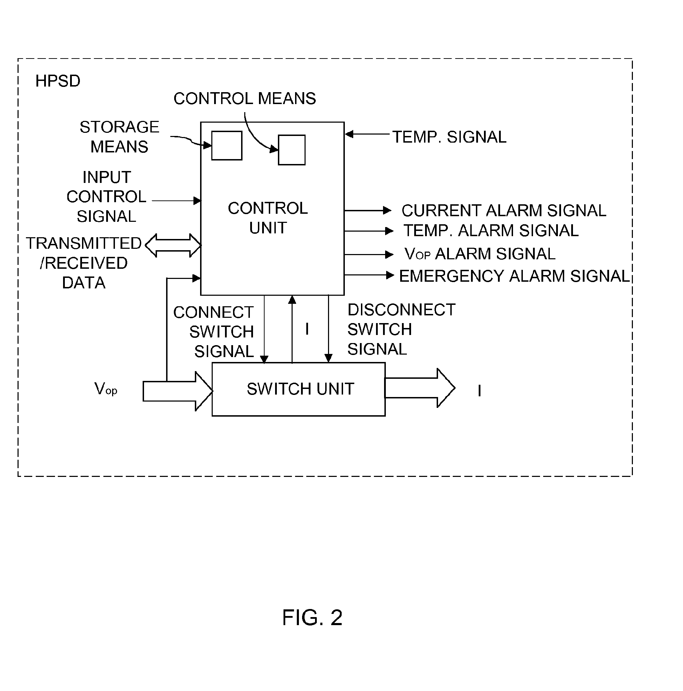

The HPSD shown in fig 2 includes a control unit and a switch unit. The control unit is arranged to monitor and control at least one, preferably several, predefined operating parameter of the power pack, e.g. a temperature, a voltage and a current, which is illustrated by input arrows in the figure. Generated signals from the control unit may include for example a number of different alarm signals (e.g. temperature, current, voltage (Vₒₚ) and emergency alarm signals), a connect switch signal and/or a disconnect switch signal, all illustrated by output arrows. The switch unit is electronically controlled and is exemplary arranged to apply a power supply to a D.C.-motor in dependence of an input control signal. The HPSD is not limited to apply power to a D.C. motor, but may also be applied to other consuming devices.

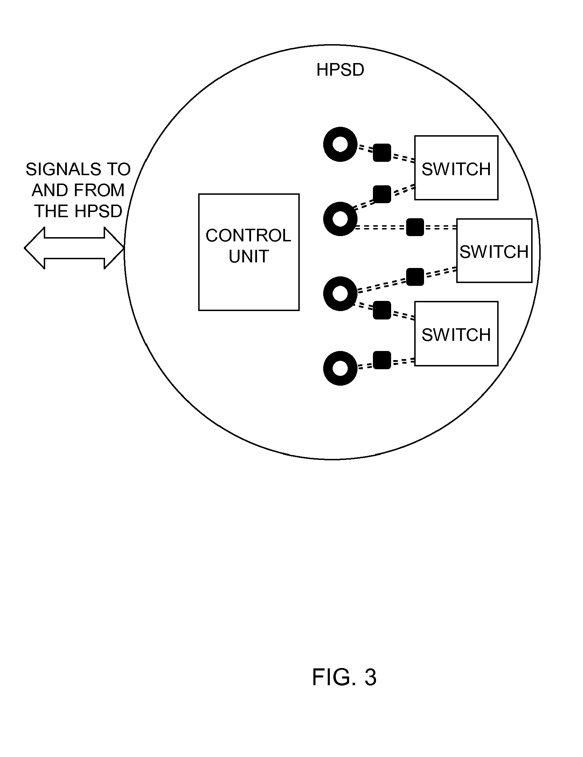

According to one embodiment illustrated in figure 3, the switch unit includes several parallel high current power switches arranged such that current, upon activation of the switch unit and consequently, the power switches, flows (illustrated by double-dashed lines) from each of the switches to a number of pegs (illustrated as four bold '**O**':s) arranged at close and optimal distances to the switches and further to the power consuming device. An example of a commercially available power switch that may be used in connection with the present invention is the "Smart Highside High Current Power Switch" from Infineon Technologies, e.g. TO-218AB/5 or TO-218AB-5-1. The high current power switch is able to sense load current and give diagnostic feedback for 12V and 24V DC grounded loads. The current is preferably at least 50A. It is suitable for a load with high inrush current like a motor and replaces an electromechanical relay. By the illustrated embodiment of the HPSD, where three high current power switches are connected in parallel, it is made possible to handle high currents from an external current source, like a battery or another power source, and transmit the current to a number of pegs and via an intermediate layer (not shown) of e.g. copper or aluminium to the power consuming device. The mentioned materials are not to be seen as limiting, thus other conducting materials are possible. By way of example, if the load current is 300A, the current to each switch is 100A and the current on each peg will then be about 75A. It should be noted that the discussed and illustrated embodiment by no means should be interpreted as limiting the scope of protection in that the number of power switches used may be arbitrary chosen, as well as the number of pegs, that naturally depends upon the specific application of the device.

The control unit includes a control means adapted to control the operation of the switch unit and storage means to store values of operating parameters of the power pack. If an operator e.g. presses a start-button, said control unit is adapted to generate a connect switch signal to the switch unit to apply a power supply to e.g. a DC-motor, and if the operator presses a stop-button or other predefined criterion or criteria is/are fulfilled, the control unit is adapted to generate a disconnect switch signal to the switch unit.

To be able to read-out how the operator has been using the equipment, under which circumstances and during how long time, different parameters are stored in the storage means of the control unit. For example, the storage means is adapted to store the operating time of the D.C.-motor, or another power consuming unit, and accumulate the total operating time between successive starts and stops. It is also possible to store how many times an operator presses a start-button, i.e. store the number of times a connect switch signal is applied to the switch unit. This information is adapted to be transmitted upon request or periodically to a remote control terminal.

The HPSD is provided with several functions that have been implemented in the control unit, and they are exemplary described below.

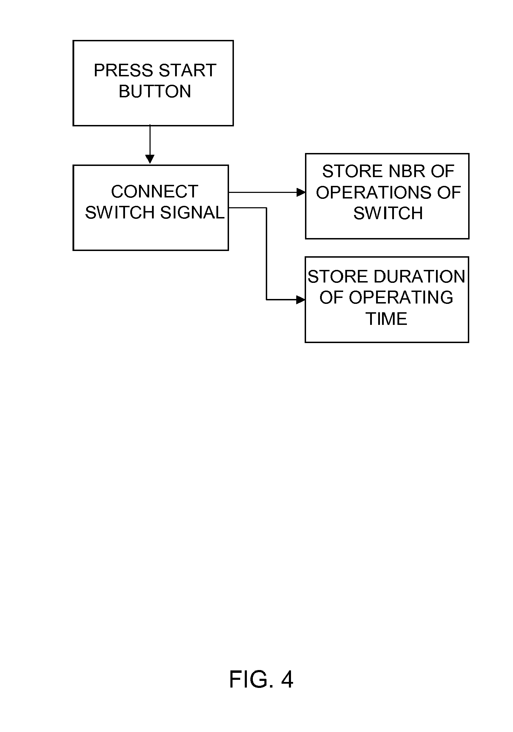

Referring to figure 4, a "Start normal operation"-function is described, where a start button is pressed and then a connect switch signal is generated. Further is a value showing how many times a connect switch signal is used is incremented by one, and the operating time is stored.

There are several scenarios where the function of the power consuming device has to be stopped to avoid break-down or malfunction of parts in the power pack. Different operating parameters may then be monitored and in the following some non-limiting examples will be discussed. For example, the operating parameter may be at least one of: a temperature, a current, a supply voltage, a pressure and/or a number of revolutions of the DC-motor. A measure or measures of the at least one operating parameter is supplied as at least one operating signal to the control unit and then compared to at least one predefined threshold. Further is an alarm signal generated if a certain criterion or certain criteria is/are fulfilled and subsequently a disconnect switch signal disconnects the high power switch unit, i.e. the D.C.-motor is stopped. The alarm signal may be any of or a combination of a light signal, a sound signal or a tactile signal.

If the operating parameter is a temperature of the D.C.-motor and a measure of the temperature is supplied as a temperature signal to the control unit, then this signal is compared to at least one predefined temperature threshold, and an alarm signal is generated if the temperature signal exceeds the temperature threshold and subsequently a disconnect switch signal disconnects the high power switch device.

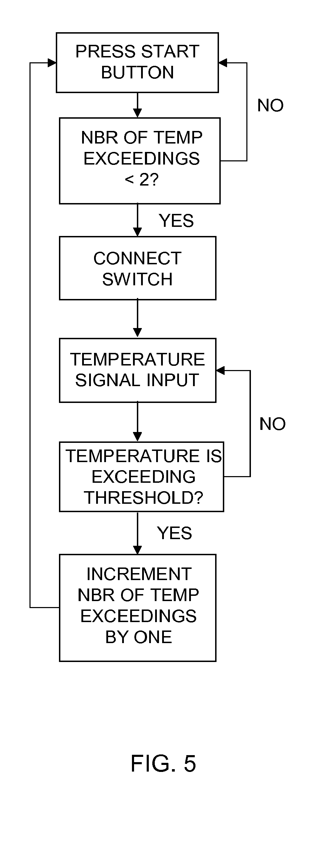

If the temperature of the motor is too high and the motor has been stopped, then the user may have (e.g.) two starting possibilities to allow further use of the motor at the exceeded temperature to, for example, be able to close a tailgate. This "Start of power pack with exceeded temperature"-function is illustrated in figure 5. The operating time with exceeded temperature is stored, as well as the total operating time and the number of starts with an exceeded temperature.

If the operating parameter is the current used to power the motor, and a measure of the current is supplied as a current signal to the control unit, then the signal is compared to at least one, e.g. four, predefined criterions or criteria. That means that e.g. four thresholds or levels of exceeded currents are registered and stored by the storage means, and an alarm signal may be generated if the current signal exceeds a maximal current threshold and subsequently a disconnect switch signal disconnects the high power switch unit. The operating time with exceeded current is stored, as well as the total operating time, and in addition the number of stops with an exceeded current.

If the operating parameter is the supply voltage from e.g. a battery or another voltage source, and that a measure of the supply voltage is supplied as a supply voltage signal (Vₒₚ) to the control unit, then the signal is compared to at least one, predefined supply voltage threshold. An alarm signal is generated if the supply voltage signal (Vₒₚ) is below a minimum supply voltage threshold and subsequently a disconnect switch signal disconnects the high power switch unit. The operating time when the supply voltage is below the minimum supply voltage threshold is stored, as well as the total operating time, and in addition the number of starts and stops with a supply voltage below the threshold.

In case of emergency, i.e. the user discovers a situation when the power consuming device immediately has to be stopped; an emergency button generating an emergency signal is pressed by a user. The emergency signal is supplied to the control unit, an alarm signal is generated and subsequently a disconnect switch signal disconnects the high power switch unit.

If several alarms/disconnections of the switch are generated during operation of the motor, they are handled with specified priority. The following priority is preferred: the alarm signal for too high current has the highest priority, followed by the alarm signal for high temperature and the alarm signal for below supply voltage. In practice this means that if all these signals are generated during operation of the motor, the procedure when a too high current is detected is followed. During start of the motor, it is the temperature alarm signal that has the highest priority, followed by the supply voltage alarm signal and the current alarm signal.

When information stored in the storage means has been transmitted to the remote control terminal, this information may be analysed to evaluate how the user have used the equipment and to be able to recommend alternative parts as being more suitable for the power consuming device, e.g. a more powerful motor etc.

The control unit can also to be controlled from the remote control terminal, for example when a power pack including the HPSD is used in a hazardous environment.

A hydraulic power pack according to the invention may be used in a variety of arrangements for powering a device, and is specifically suitable for arrangements where a high current is required, e.g. a tailgate lift, a platform lift, a forklift or a highlift.
The present invention is not limited to the above-described preferred embodiments. Various alternatives, modifications and equivalents may be used. Therefore, the above embodiments should not be taken as limiting the scope of the invention, which is defined by the appending claims.

## Claims

1. Power pack comprising a high power switch device (HPSD), a D.C. motor and a hydraulic pump, **characterized in that** said high power switch device includes
- a control unit arranged to monitor and control at least one predefined operating parameter of the power pack, and
- an electronically controlled high power switch unit arranged to apply a power supply to said D.C.-motor in dependence of an input control signal.

2. Power pack according to claim 1, **characterized in that** said control unit includes a control means adapted to control the operation of the switch unit and a storage means to store values of operating parameters of the power pack.

3. Power pack according to claim 1 or 2, **characterized in that** said control unit is adapted to generate a connect switch signal to said switch unit to apply said power supply to said DC-motor, and that said control unit is adapted to generate a disconnect switch signal to said switch unit if one or many predefined criterions or criteria is/are fulfilled.

4. Power pack according to claim 3, **characterized in that** said storage means is adapted to store the operating time of the D.C.-motor and accumulates the total operating time.

5. Power pack according to claim 3, **characterized in that** said storage means is adapted to store the number of times a connect switch signal is applied to the switch unit.

6. Power pack according to any of the claims 2-5, **characterized in that**
- said operating parameter is at least one of: a temperature, a current, a supply voltage, a pressure, a number of revolutions of the DC-motor, and that
- a measure or measures of said at least one operating parameter is supplied as at least one operating signal to the control unit and compared to at least one predefined threshold, and that
- an alarm signal is generated if a certain criterion or certain criteria is/are fulfilled and subsequently a disconnect switch signal disconnects the high power switch unit.

7. Power pack according to claim 6, **characterized in that** said storage means is adapted to store an alarm operating time during which an alarm signal has been generated and the power consuming device is under operation, and accumulates the total alarm operating time.

8. Power pack according to claim 6, **characterized in that** said storage means is adapted to store a number of times said operating signal/s fulfil/s said predefined criterion or criteria.

9. Power pack according to any of claims 2-5, **characterized in that**
- said operating parameter is an emergency signal from an operator, and that
- said emergency signal is supplied to the control unit, and
- an emergency alarm signal is generated and subsequently a disconnect switch signal disconnects the high power switch unit.

10. Power pack according to any of the claims 3-9, **characterized in that** said alarms/disconnections of the switch are handled with specified priority order during operation of the motor or start of the motor.

11. Power pack according to any of claims 2-10, **characterized in that** parameters stored in said storage means are transmitted to a remote control terminal upon a request to transmit data to said control unit from said remote control terminal.

12. Power pack according to claim 11, **characterized in that** parameters stored in said storage means are wirelessly transmitted to said remote control terminal.

13. Power pack according to any of the claims, **characterized in that** the control unit is controlled from a remote control terminal.

14. Power pack according to claim 1, **characterized in that** said applied power has a current of at least 50A.

15. Arrangement, e.g. a tailgate lift, a platform lift, a forklift or a highlift, comprising a hydraulic power pack according to any of claims 1-14.

16. High power switch device (HPSD) being used to supply power to a power consuming device, **characterized in that** said high power switch device includes
- a control unit arranged to monitor and control at least one predefined operating parameter of the power consuming device, and
- an electrically controlled high power switch unit arranged to supply power to said power consuming device in dependence of an input control signal.

17. High power switch device (HPSD) according to claim 16, **characterized in that** said high power switch unit includes several parallel high power current switches where current, upon activation of the switch unit, flows from each of the switches to a number of pegs arranged at close and optimal distances to the switches and further to the power consuming device.

18. High power switch device (HPSD) according to any of the claims 16-17, **characterized in that** said operating parameter supplied to said control unit is at least one of a temperature, a voltage and a current, and generated signals from the control unit is at least one of an alarm signal, a connect switch signal and a disconnect switch signal.
